# EUROPEAN PATENT APPLICATION

(11) **EP 4 354 330 A1**
(43) Date of publication of application: **17.04.2024**
(21) Application number: 23765792.9
(22) Date of filing: 22.02.2023
(51) Int. Cl.: G06F 21/57

(54) **TRANSACTION METHOD FOR SECURE SERVICE AND TERMINAL**

(30) Priority: 09.03.2022 CN 202210223921; 18.08.2022 CN 202210992941
(71) Applicant: Huawei Technologies Co., Ltd., Longgang Shenzhen, Guangdong 518129 (CN)
(72) Inventor: LI, Zhuofei, Shenzhen, Guangdong 518129 (CN); ZHANG, Jianjun, Shenzhen, Guangdong 518129 (CN); BIAN, Shizhu, Shenzhen, Guangdong 518129 (CN); YAO, Zhendong, Shenzhen, Guangdong 518129 (CN)
(74) Representative: Körber, Martin Hans
(86) International application number: PCT/CN2023/077729
(87) International publication number: WO 2023/169214

(57) **Abstract**

A security service transaction method and a terminal are provided, and relate to the terminal field. After the terminal is powered off, a security service that supports a transaction may be switched to, to meet a transaction requirement of a user in a power-off scenario of the terminal. The terminal includes a first card list, the first card list includes information about a card that is set to support a transaction after the terminal is powered off or when a battery level of the terminal is less than a preset threshold, and a first card is in an inactivated state when the terminal is in a powered-on state or when the battery level of the terminal is greater than or equal to the preset threshold. The method includes: The terminal automatically switches the first card to an activated state when the terminal detects a power-off event or that the battery level of the terminal is less than the preset threshold. In this case, after the terminal is powered off or the battery level of the terminal is less than the preset threshold, the first card of the terminal may continue performing a transaction with a card reading device. There are one or more first cards.

## Description

This application claims priorities to Chinese Patent Application No. 202210223921.9, filed with the China National Intellectual Property Administration on March 9, 2022 and entitled "METHOD FOR MAKING MULTIPLE SERVICES AVAILABLE AFTER POWER OFF", and to Chinese Patent Application No. 202210992941.2, filed with the China National Intellectual Property Administration on August 18, 2022 and entitled "SECURITY SERVICE TRANSACTION METHOD AND TERMINAL", both of which are incorporated herein by reference in their entireties.

### TECHNICAL FIELD

This application relates to the terminal field, and in particular, to a security service transaction method and a terminal.

### BACKGROUND

Currently, a terminal like a mobile phone or a watch includes three layers of application environments: a rich execution environment (Rich Execution Environment, REE), a trusted execution environment (Trusted Execution Environment, TEE), and a secure element (Secure Element, SE). The terminal separately deploys corresponding applications in the three layers of application environments based on security levels of different data in a security service (for example, a bank card, a transportation card, or a vehicle key). In other words, a corresponding application may be set for one security service in each of the REE, the TEE, and the SE.

After the terminal is powered off, all security services of the terminal cannot perform transaction, or only one default security service of the terminal can perform transaction. It can be learned that an existing technical solution cannot meet a transaction requirement of a user in a power-off scenario of the terminal.

### SUMMARY

This application provides a security service transaction method and a terminal, so that the terminal can switch to a security service that supports a transaction after the terminal is powered off, to meet a transaction requirement of a user in a power-off scenario of the terminal.

To achieve the foregoing objective, embodiments of this application provide the following technical solutions.

According to a first aspect, a card switching method is provided, and is applied to a terminal. The terminal includes a first card list, and the first card list includes information about a card that is set to support a transaction during power off of the terminal or when a battery level of the terminal is less than a preset threshold. A first card in the terminal is in an inactivated state when the terminal is in a power-on state or the battery level of the terminal is greater than or equal to the preset threshold. The method includes: After the terminal detects a power-off event or that the battery level of the terminal is less than the preset threshold, the terminal switches the first card to an activated state when determining that the first card list includes the first card. In this way, the first card of the first terminal may be used for a transaction with a card reading device. There are one or more first cards.

The first card list includes a card that is expected by a user and that can still be used for a transaction after the terminal is powered off or the battery level of the terminal is less than the preset threshold. The first card list includes the first card. This indicates that the user expects that the first card can still be used for a transaction after the terminal is powered off or the battery level is less than the preset threshold.

In the conventional technology, after the terminal is powered off, all cards are in an inactivated state, or after the terminal is powered off, a status of a card in an activated state before the terminal is powered off is retained by default. It can be learned that the conventional technology cannot meet a transaction requirement of the user after the terminal is powered off. However, in this application, the first card list may be set, so that after the terminal is powered off, a card that is in an inactivated state before power off is automatically switched to an activated state, and the first card may continue a transaction after power off. This meets a transaction requirement of the user after power off.

In a possible implementation, the terminal further includes a second card. The second card is in an activated state when the terminal is in a power-on state or the battery level of the terminal is greater than or equal to the preset threshold. Before the terminal switches the first card to the activated state after the terminal detects the power-off event or that the battery level of the terminal is less than the preset threshold, the method further includes: The terminal switches the second card to an inactivated state, where the first card list does not include the second card.

That the first card list does not include the second card indicates that the user expects that the second card cannot be used for a transaction after the terminal is powered off or the battery level of the terminal is less than the preset threshold. For example, the second card is a high-security service (for example, an access card for entering a secure area, or an electronic certificate including sensitive information). In this case, before the terminal is powered off, the terminal may automatically switch the second card to an inactivated state.

If the second card is a high-security service (for example, an access card for entering a secure area, or an electronic certificate including sensitive information), transaction may be performed after power off, and a security risk exists. Alternatively, the second card is a card that requires user authentication. After power off, neither the REE module nor the TEE module of the terminal works, user authentication cannot be performed, and the second card is also unavailable after power off. In addition, if a contactless parameter of the second card conflicts with that of the first card that needs to be activated subsequently, an activation failure may occur when the first card is activated subsequently. Therefore, in this embodiment of this application, the second card is deactivated to help ensure transaction security of the second card, and also help improve a transaction success rate of the first card after power off.

In a possible implementation, the terminal further includes a second card list, the second card list includes information about a card that is set to support a transaction in a preset mode during power off of the terminal or when the battery level of the terminal is less than the preset threshold, and the second card list includes the first card. Before the terminal switches the first card to the activated state after the terminal detects the power-off event or that the battery level of the terminal is less than the preset threshold, the method further includes: The terminal switches a working mode of the first card to the preset mode.

In other words, the terminal may further include some cards having two or more working modes. The terminal may control such cards to be in different working modes during power on of the terminal and during power off of the terminal, to meet different transaction requirements of the user. Herein, the first card is used as an example. Before the terminal automatically switches the first card to an activated state, and after the terminal determines that the second card list includes the first card, the terminal switches the working mode of the first card to the preset mode, and then activates the first card. It may be understood that before the first card is activated, the working mode of the first card is switched to the preset mode. This helps ensure transaction security of the first card.

In a possible implementation, the terminal further includes a third card. The third card is in an activated state when the terminal is in a power-on state or the battery level of the terminal is greater than or equal to the preset threshold. The method further includes: The terminal switches a working mode of the third card to the preset mode after the terminal detects the power-off event or that the battery level of the terminal is less than the preset threshold, where the second card list includes the third card.

In other words, the third card in the second card list is already in an activated state during power on or when the battery level of the terminal is greater than or equal to the preset threshold. In this way, after the power-off event is detected or the battery level of the terminal is less than the preset threshold, the working mode of the third card in the second card list may be directly switched to the preset mode.

In a possible implementation, a card set in the second card list is a subset of a card set in the first card list. The first card list and the second card list may be two independent lists. The first card list includes information about a card that can be used for a transaction after power off. The second card list includes information about a card that needs to be in the preset mode after power off. It may be understood that cards in the first card list include cards in the second card list. Certainly, the first card list and the second card list may also be a same list. The list (namely, the first card list) includes all cards that can be used for transactions after power off. A card that needs to work in the preset mode after power off is marked (that is, a card in the second card list is marked). Forms of the first card list and the second card list are not limited in this embodiment of this application.

In a possible implementation, after the terminal switches the first card to an activated state, the method further includes: The terminal switches the first card to an inactivated state after the terminal detects a power-on event or that the battery level of the terminal is greater than or equal to the preset threshold.

It can be learned that, after the terminal is powered on again, each card (for example, the first card) is restored to a status that is before power off. This retains an operation habit of the user during power-on, and avoids confusion of the user during use.

In a possible implementation, the method further includes: The terminal stores a first state of the first card, where the first state is a status of the first card when the terminal is in a power-on state or the battery level of the terminal is greater than or equal to the preset threshold. That the terminal switches the first card to an inactivated state after the terminal detects the power-on event or that the battery level of the terminal is greater than or equal to the preset threshold includes: The terminal further obtains a second state of the first card after the terminal detects the power-on event or that the battery level of the terminal is greater than or equal to the preset threshold. The second state is a status of the first card when the terminal is in a power-off state or the battery level of the terminal is less than the preset threshold. When the first state of the first card is an inactivated state and the second state of the first card is an activated state, the terminal switches the first card to the inactivated state. Therefore, a method for restoring a status of each card after the terminal is powered on again is provided.

In a possible implementation, after the terminal switches the second card to an inactivated state, the method further includes: The terminal switches the second card to an activated state after the terminal detects a power-on event or that the battery level of the terminal is greater than or equal to the preset threshold.

In a possible implementation, after the terminal switches the working mode of the first card to the preset mode, the method further includes: The terminal switches the first card to a non-preset mode after the terminal detects a power-on event or that the battery level of the terminal is greater than or equal to the preset threshold.

In a possible implementation, after the terminal switches the working mode of the third card to the preset mode, the method further includes: The terminal switches the third card to a non-preset mode after the terminal detects a power-on event or that the battery level of the terminal is greater than or equal to the preset threshold.

In a possible implementation, before the terminal switches the first card to the activated state after the terminal detects the power-off event or that the battery level of the terminal is less than the preset threshold, the method further includes: The terminal receives a first operation of a user, and determines the first card list based on the first operation.

In other words, the first operation of the user is used to set the first card list. Generally, for a card that has a low security requirement in the terminal and that does not need to be authenticated by a user, the user may set the card whether to be used for a transaction after the terminal is powered off. For example, the card may be various types of transportation cards, access cards (or specifically, access cards for general areas), and keys (for example, vehicle keys).

In a possible implementation, the method further includes: The terminal receives a second operation of the user, and determines the second card list based on the first card list and the second operation.

In other words, the second operation of the user is used to set the second card list. Certainly, the terminal may also automatically determine the second card list based on a card property (whether a card has a plurality of working modes), transaction security, and the like.

In a possible implementation, the terminal includes a near field communication NFC module. After the terminal switches the first card to an activated state, and after the terminal detects the power-off event or that the battery level of the terminal is less than the preset threshold, the method further includes: After the terminal is powered off or the battery level of the terminal is less than the preset threshold, the terminal receives, by using the NFC module, an instruction for selecting the first card by a card reading device; and in response to the instruction for selecting the first card, the first card in the terminal performs transaction service with the card reading device.

According to a second aspect, a terminal is provided, including a processor, a memory, a near field communication NFC module, and a touchscreen. The memory, the touchscreen, and the NFC module are coupled to the processor. The processor includes a secure element SE module, the memory is configured to store computer program code, and the computer program code includes computer instructions. When the processor reads the computer instructions from the memory, the terminal is enabled to perform the method in any one of the foregoing aspects and the possible implementations of the foregoing aspects.

According to a third aspect, an apparatus is provided. The apparatus is included in a terminal, and the apparatus has a function of implementing behavior of the terminal in any one of the methods in the foregoing aspects and the possible implementations. This function may be implemented by hardware, or may be implemented by executing corresponding software by hardware. The hardware or the software includes at least one module or unit corresponding to the foregoing function. For example, a receiving module or unit, a display module or unit, and a processing module or unit.

According to a fourth aspect, a computer-readable storage medium is provided, including computer instructions. When the computer instructions are run on a terminal, the terminal is enabled to perform the method in any one of the foregoing aspects and the possible implementations of the foregoing aspects.

According to a fifth aspect, a computer program product is provided. When the computer program product runs on a computer, the computer is enabled to perform the method in any one of the foregoing aspects and the possible implementations of the foregoing aspects.

According to a sixth aspect, a chip system is provided, including a processor. When the processor executes instructions, the processor performs the method in any one of the foregoing aspects and the possible implementations of the foregoing aspects.

For technical effects that can be achieved by the terminal provided in the second aspect, the apparatus provided in the third aspect, the computer-readable storage medium provided in the fourth aspect, the computer program product provided in the fifth aspect, and the chip system provided in the sixth aspect, refer to descriptions about the technical effects in the first aspect and any one of the possible implementations of the first aspect. Details are not described herein again.

### BRIEF DESCRIPTION OF DRAWINGS

FIG. 1 is a schematic diagram of a structure of a terminal according to an embodiment of this application;
FIG. 2 is a schematic diagram of another structure of a terminal according to an embodiment of this application;
FIG. 3 is a schematic flowchart of a method for setting a card that can be used for a transaction after power off according to an embodiment of this application;
FIG. 4(1) to FIG. 4(3) are a schematic diagram of some user interfaces of a terminal according to an embodiment of this application;
FIG. 5 is a schematic flowchart of a method for processing a security service before a terminal is powered off according to an embodiment of this application;
FIG. 6 is a schematic flowchart of a method for processing a security service during power on of a terminal according to an embodiment of this application;
FIG. 7 is a schematic flowchart of another method for processing a security service before a terminal is powered off according to an embodiment of this application;
FIG. 8A and FIG. 8B are a schematic flowchart of another method for processing a security service during power on of a terminal according to an embodiment of this application; and
FIG. 9 is a schematic diagram of a structure of a chip system according to an embodiment of this application.

### DESCRIPTION OF EMBODIMENTS

In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists.

The following terms "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

In embodiments of this application, a word "example", "for example", or the like is used to give an example, an illustration, or a description. Any embodiment or design solution described as "example" or "for example" in embodiments of this application should not be explained as being more preferred or having more advantages than another embodiment or design solution. Specifically, use of a word like "example" or "for example" is intended to present a related concept in a specific manner.

A security service transaction method provided in embodiments of this application is applicable to a terminal including an SE module. For example, a terminal 100 in embodiments of this application may be a mobile phone, a tablet computer, a personal computer (personal computer, PC), a personal digital assistant (personal digital assistant, PDA), a netbook, a wearable terminal (for example, a smartwatch or a smart band), an augmented reality (augmented reality, AR) device, a virtual reality (virtual reality, VR) device, a vehicle-mounted device, a smart screen, a smart automobile, a smart sound box, or the like. A specific form of the terminal 100 is not specifically limited in this application.

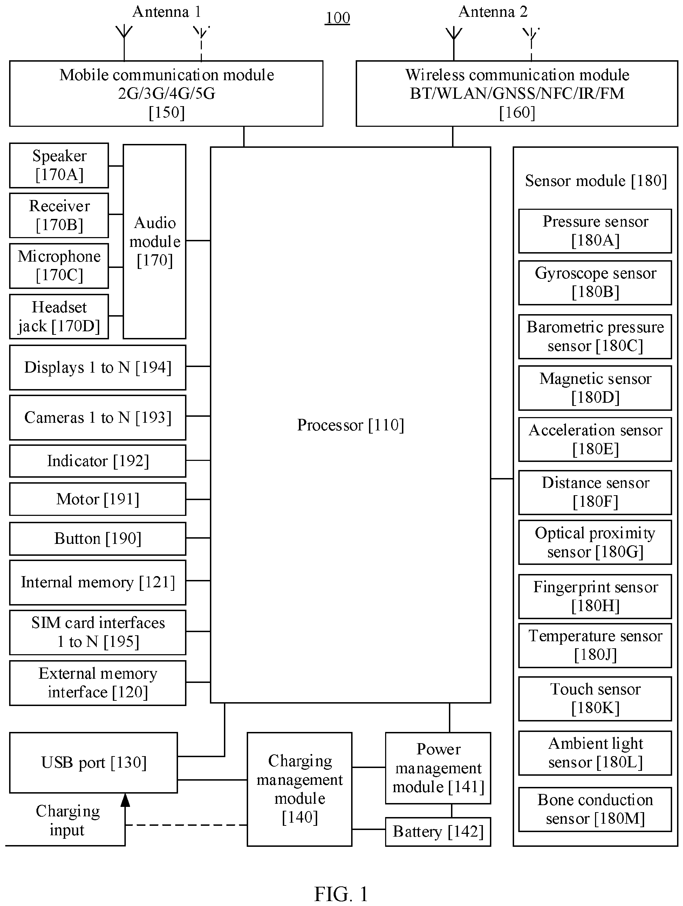

FIG. 1 is a schematic diagram of a structure of the terminal 100.

The terminal 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may generate an operation control signal based on an instruction operation code and a time sequence signal, and complete control of instruction fetching and instruction execution.

A memory may be further disposed in the processor 110, and is configured to store instructions and data. In some embodiments, the memory in the processor 110 is a cache memory. The memory may store instructions or data that is just used or cyclically used by the processor 110. If the processor 110 needs to use the instructions or the data again, the instructions or the data may be directly invoked from the memory. In this way, repeated access is avoided, and waiting time of the processor 110 is reduced. This improves system efficiency.

The charging management module 140 is configured to receive a charging input from a charger. The charger may be a wireless charger or a wired charger. In some embodiments of wired charging, the charging management module 140 may receive a charging input from the wired charger through the USB port 130. In some embodiments of wireless charging, the charging management module 140 may receive a wireless charging input through a wireless charging coil of the terminal 100. The charging management module 140 may supply power to the terminal by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (an electric leakage or an impedance). In some other embodiments, the power management module 141 may also be disposed in the processor 110. In some other embodiments, the power management module 141 and the charging management module 140 may alternatively be disposed in a same device.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may further be multiplexed, to improve antenna usage. For example, the antenna 1 may be multiplexed as a diversity antenna of a wireless local area network. In some other embodiments, the antenna may be used in combination with a tuning switch.

The mobile communication module 150 may provide a solution that is applied to the terminal 100 and that includes wireless communication like 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the terminal 100 and that includes wireless communication like a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more devices that integrate at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments and in the terminal 100, the antenna 1 is coupled to the mobile communication module 150, and the antenna 2 is coupled to the wireless communication module 160, so that the terminal 100 can communicate with another device through a wireless communication technology and a network. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 implements a display function by using the GPU, the display 194, the application processor, and the like. The GPU is a microprocessor for image processing, and is connected to the display 194 and the application processor. The GPU is configured to perform mathematical and geometric calculations for graphics rendering. The processor 110 may include one or more GPUs that execute program instructions to generate or change display information.

The terminal 100 may implement a photographing function by using the ISP, the camera 193, the video codec, the GPU, the display 194, the application processor, and the like.

The external memory interface 120 may be configured to connect to an external memory card, for example, a micro SD card, to extend a storage capability of the terminal 100. The external memory card communicates with the processor 110 through the external memory interface 120, to implement a data storage function. For example, files such as music and a video are stored in the external memory card.

The internal memory 121 may be configured to store computer-executable program code, where the executable program code includes instructions. The internal memory 121 may include a program storage area and a data storage area. The program storage area may store an operating system, an application required by at least one function (for example, a sound playing function and an image playing function), and the like. The data storage area may store data (like audio data and a phone book) created during use of the terminal 100. In addition, the internal memory 121 may include a high speed random access memory, and may further include a nonvolatile memory, for example, at least one magnetic disk storage device, a flash storage device, or a universal flash memory (universal flash storage, UFS). The processor 110 executes various function applications of the terminal 100 and data processing by running the instructions stored in the internal memory 121 and/or the instructions stored in the memory disposed in the processor.

The terminal 100 may implement an audio function by using the audio module 170, the speaker 170A, the receiver 170B, the microphone 170C, the headset jack 170D, the application processor, and the like. For example, playing music, and recording.

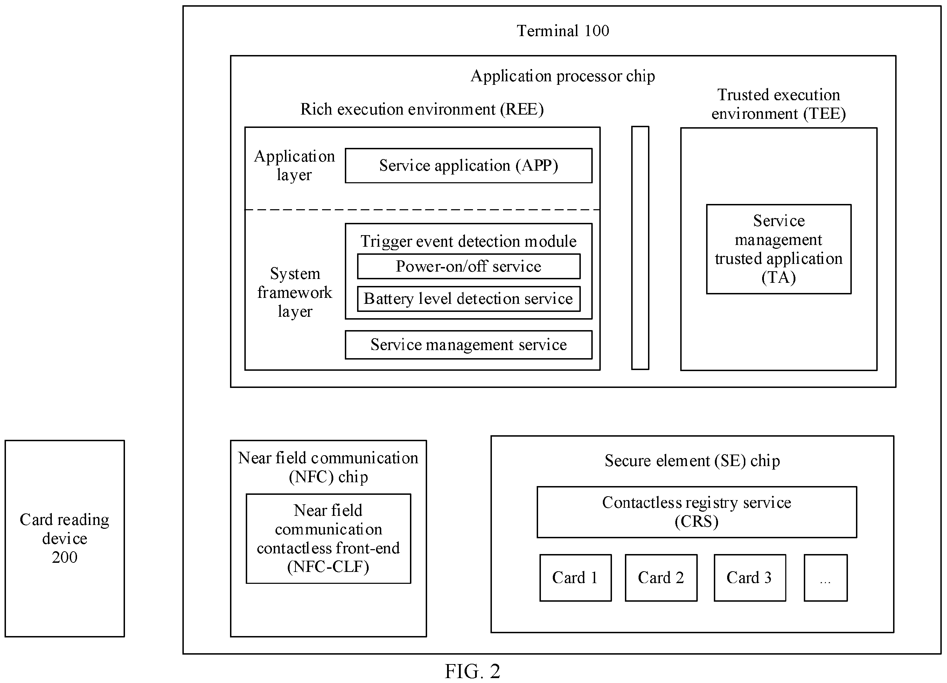

FIG. 2 is a schematic diagram of a software structure of a terminal 100 according to an embodiment of this application.

As shown in FIG. 2, the terminal 100 includes three application environments: a rich execution environment (Rich Execution Environment, REE) module, a trusted execution environment (Trusted Execution Environment, TEE) module, and a secure element (Secure Element, SE) module. In an example, the REE module and the TEE module are integrated into a chip, for example, integrated into an application processor (Application Processor, AP) chip, and the SE module is integrated into another chip, for example, an SE chip.

The REE module includes a general operating system (not shown in the figure) running on a general-purpose embedded processor, for example, a Rich OS or a kernel-based operating system (for example, an Android system or a Harmony system), and an application/a service in the REE module.

In some examples, the REE module may include an application layer and a system framework layer. The application layer includes a series of applications (Application, APP), for example, includes a service APP (for example, a wallet APP), and supports addition of a bank card, a transportation card, an electronic certificate, change, a membership card, an invoice, a community access card, a smart home door lock card, a smart hotel room card, and the like. The terminal can be used to meet security services such as transportation and mobile payment. In some examples, the service APP may further receive information about a security service (namely, a card) that is set by a user and that can perform transaction after power off, and the like. Optionally, the service APP may further receive information about a security service that is set by the user and whose working mode needs to be switched after power off, and the like. The system framework layer provides an application programming interface (application programming interface, API), a programming framework, and the like for an APP at the application layer. The system framework layer includes some predefined functions. For example, the system framework layer includes a trigger event detection module, a service management service, and the like. The trigger event detection module detects a trigger event of the terminal 100, and the trigger event includes a first trigger event and a second trigger event. The first trigger event is used to trigger the terminal to start to switch a status of a card in the terminal (for example, switch from an activated state to an inactivated state, or switch from an inactivated state to an activated state). For example, the first trigger event includes a power-off event, and/or an event that a battery level of the terminal is less than a preset threshold. The second trigger event is used to trigger the terminal to restore a status (for example, an activated state or an inactivated state) that is of each card in the terminal and that is before the first trigger event is detected. For example, the second trigger event includes a power-on event, and/or an event that the battery level of the terminal is greater than or equal to the preset threshold. During specific implementation, the trigger event detection module includes a power-on/off service used to: detect power-on and power-off events of the terminal 100, and notify the service management service of the detected power-on event or power-off event of the terminal 100. For another example, the trigger event detection module may also include a battery level detection service used to detect a battery level status of the terminal 100. When an event that the battery level of the terminal 100 is less than the preset threshold or an event that the battery level of the terminal is greater than or equal to the preset threshold is detected, the service management service is notified, to forward a trigger event to the TEE module.

The TEE module has an independent running environment and runs outside the REE module. The TEE module provides a security service for the REE module, and is isolated from the REE module. The REE module (including a general operating system and an application of the general operating system) cannot directly access hardware and software resources of the TEE module. The TEE module provides a reliable running environment for applications in the TEE module, and ensures end-to-end security by protecting confidentiality and integrity and controlling data access permission. The TEE module is parallel to the REE module and interacts with the REE module through a secure application programming interface (Application Programming Interface, API). The TEE module provides a running environment with a higher security level than that of the REE module, but cannot provide a secure key storage and running environment with a hardware isolation level. An application in the TEE module is also referred to as a trusted application (TEE application, TA).

For example, the TEE module includes a service management TA used to: after receiving a first trigger event (for example, a power-off event or an event that a battery level of a terminal is less than a preset threshold) forwarded by the service management service, indicate the SE module to activate a security service that can perform transaction after power off or when a battery level of a terminal is less than a preset threshold, and deactivate (deactivated) a security service that cannot perform transaction after power off or when a battery level of a terminal is less than a preset threshold. Optionally, after receiving the first trigger event forwarded by the service management service, the service management TA may further indicate the SE module to switch working modes of some security services.

For another example, the service management TA is used to: after receiving the second trigger event (for example, a power-on event or an event that a battery level of a terminal is greater than or equal to a preset threshold) forwarded by the service management service, indicate the SE module to restore a status of each card to a status and/or a working mode before the first trigger event is detected.

The SE module is used to construct a trusted and secure key storage and key operation environment. This is because a software system in the SE module is simple, and hardware components are few. Therefore, it is easy to establish physical protection and implement security assurance, so that security strength of the SE module is improved, and a security system having a higher security requirement can be served. The SE module includes a card operating system (Chip Operating System, COS) module (not shown in the figure), a contactless registry service (Contactless Registry service, CRS) module, and an application (for example, a card 1 or a card 2 in FIG. 2) in the SE module. The COS is an operating system of the SE chip, and is used to: preprocess received application protocol data unit (Application Protocol Data Unit, APDU) instructions, and distribute the instructions to corresponding services or applications in the SE for processing. The CRS is a system application in the SE module, and is responsible for registration management, activation or deactivation (that is, activation canceling) of an application in the SE module. The application in the SE module may also be referred to as an Applet or a card, for example, may be one or more of a bank card, a transportation card, an access card, an employee ID card, an electronic certificate, a vehicle key, and typical support (for example, Alipay^{™} and WeChat Pay^{™}).

It should be further noted that the "service APP", "trigger event detection module", "service management service", "service management TA", and the like herein are names provided in this application for ease of solution description, and cannot be used as a limitation on functions of the solutions in this application in some examples.

It should be noted that the terminal 100 further includes an NFC module used to support the terminal 100 in communicating with another NFC device (for example, a card reading device 200). The NFC module includes a contactless front-end (Contactless Front-End, CLF). The contactless front-end is a controller of the NFC module, may receive APDU instructions of the card reading device 200, and send the received APDU instructions to the COS of the SE chip, so that the COS distributes the received APDU instructions to corresponding applications in the SE module for service transactions. In an example, the NFC module may be integrated into another chip independent of the AP chip and the SE chip, and the another chip is also referred to as an NFC chip. It should be noted that, when the terminal 100 is powered off, the terminal 100 with a remaining battery level may supply power to the NFC module and the SE module of the terminal 100, that is, the NFC module and the SE module of the terminal 100 may still work. In this case, after the terminal 100 is powered off, if the card 1 in the SE module is in an activated state, the card 1 may still be used for a transaction with the card reading device 200.

With reference to the software structure of the terminal 100 shown in FIG. 2, the following describes in detail the technical solutions provided in embodiments of this application by using an example in which the first trigger event is a power-off event and the second trigger event is a power-on event. In an example, the power-on/off service in the trigger event detection module is specifically used to detect a power-off event and a power-on event.

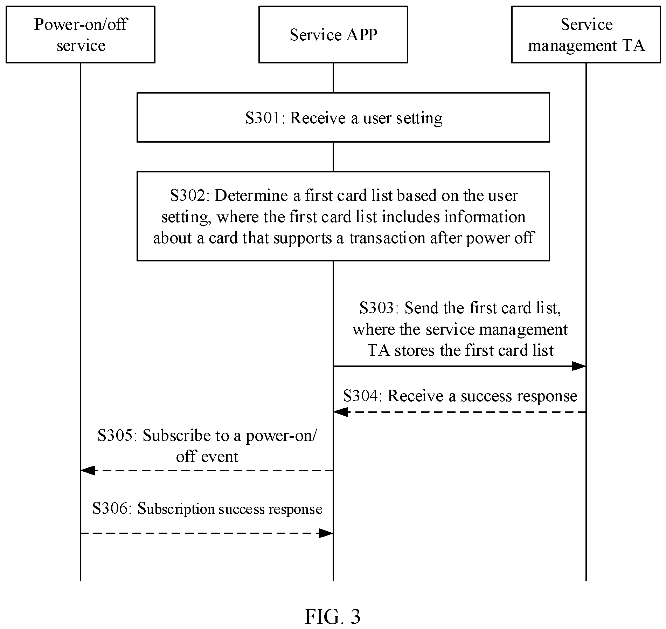

In some embodiments of this application, the terminal may determine, based on a user setting or a default setting of the terminal, a security service (also referred to as a card) that can perform transaction after the terminal is powered off, that is, determine the following first card list. FIG. 3 is an example flowchart of a method for setting a security service that can perform transaction after a terminal is powered off according to an embodiment of this application. The method includes the following steps.

S301: A service APP of an REE module receives a user setting.

In an example, the service APP in the REE module may provide a setting interface, so that a user sets a security service (also referred to as a card) that is expected to perform transaction after a terminal 100 is powered off.

S302: The service APP determines a first card list based on the user setting, where the first card list includes information about a card that supports a transaction after the terminal 100 is powered off.

In some examples, the service APP may determine, from added cards in the terminal based on a factor like card transaction security, a card that is allowed by a system to be used for a transaction after power off. Generally, for a card that has a low security requirement in the terminal and that does not need to be authenticated by a user, the user may set the card whether to be used for a transaction after the terminal is powered off. For example, the card may be various types of transportation cards, access cards (or specifically, access cards for general areas), and keys (for example, vehicle keys). Then, the service APP provides a user setting interface. The interface includes only the card that is allowed by a system to be used for a transaction after power off, so that the user sets a card that is expected by the user to be used for a transaction after the terminal is powered off, that is, the first card list is obtained.

In some other examples, the user may set all the added cards in the terminal, and set a card that is expected by the user to be used for a transaction after the terminal is powered off, to obtain a card list a. In addition, the service APP determines, based on a factor like card transaction security, a card that is allowed by a system to be used for a transaction after power off, to obtain a card list b. Then, the service APP determines, based on the card list a and the card list b, an intersection set of the two card lists as the first card list, that is, information about a card that is set by the user and that is expected to be used for a transaction after the terminal is powered off is obtained. Alternatively, when the user sets the card that is expected to be used for a transaction after the terminal is powered off, the terminal may also automatically detect whether the card set by the user is in the card list b, that is, whether the card is the card that is allowed by a system to be used for a transaction after power off. When the card set by the user is not in the card list b, the terminal may prompt the user and prevent the user from setting the card to be available for a transaction after power off. In conclusion, a specific implementation of determining the first card list by the service APP is not limited in this embodiment of this application.

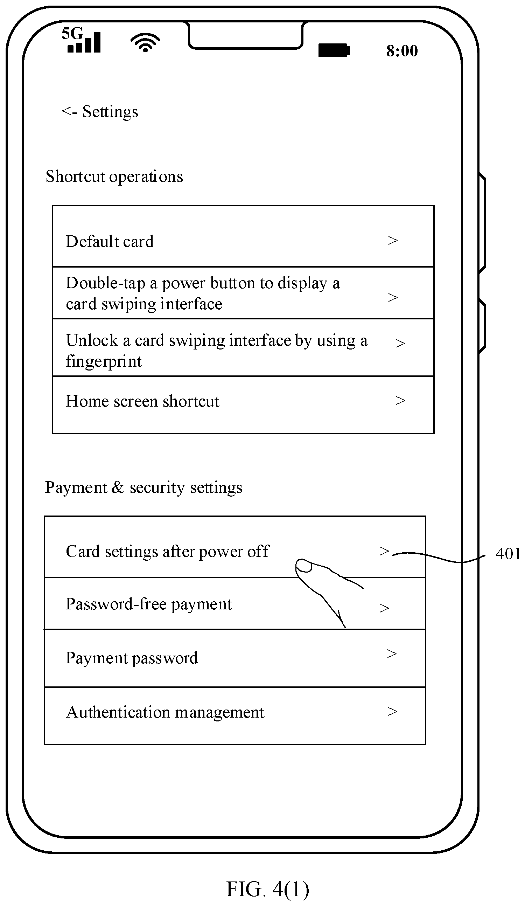

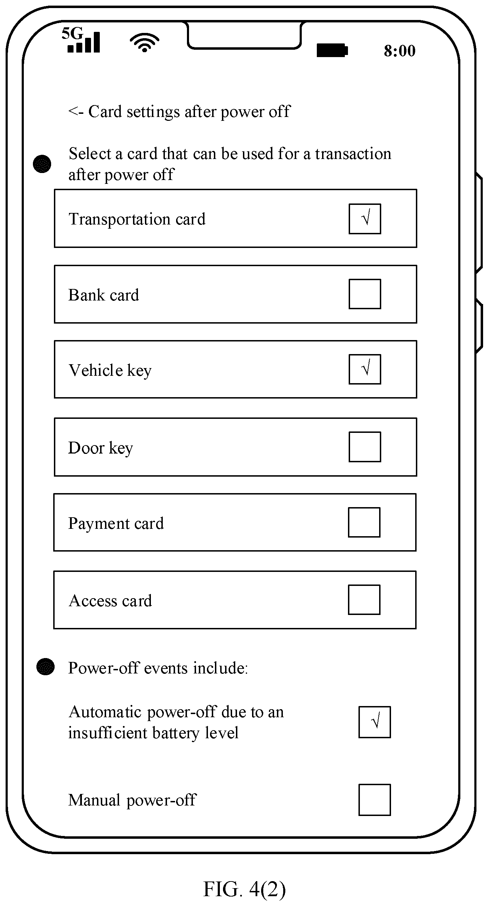

For example, the service APP is a wallet APP. An interface shown in FIG. 4(1) is a setting interface of the wallet APP. The setting interface includes an item "Card settings after power off" 401. In response to the fact that it is detected that the user performs an operation on the item "Card settings after power off" 401, the terminal displays a detailed setting interface for cards after power off, shown in FIG. 4(2). In this interface, the user may select, by using a checkbox corresponding to each card, a card that is expected by the user to be used for a transaction after the terminal is powered off. For example, the first card list includes a transportation card and a vehicle key.

S303: The service APP sends the first card list to a service management TA of a TEE module, and the service management TA stores the first card list.

For example, the service APP in the REE module may directly send the first card list to the service management TA in the TEE module, or may send the first card list to the service management TA in the TEE module by using a service management service in the REE module. This is not limited in this embodiment of this application.

S304: The service management TA returns, to the service APP, a response indicating that the first card list is successfully received. This step is optional.

It should be noted that, in some other examples, the service APP may directly send, to the service management TA, the information about a card that is set by the user and that is expected to be used for a transaction after the terminal is powered off, and the service management TA determines the first card list. Alternatively, in some other examples, the service APP may directly send, to the service management service in the REE module, the information about a card that is set by the user and that is expected to be used for a transaction after the terminal is powered off, and the service management service determines the first card list. Then, the service management service sends the first card list to the service management TA. For how the service management TA in the TEE module or the service management service in the REE module determines the first card list, refer to a method for determining the first card list by the service APP. Details are not described herein again.

S305: The service APP subscribes to a power-on/off event of the terminal from a power-on/off service in the REE module. This step is optional.

In some other examples, the service management service in the REE module or the service management TA in the TEE module may subscribe to the power-on/off event of the terminal from the power-on/off service in the REE module.

It should be noted that the subscribed power-on/off event herein includes a power-on event and a power-off event. The subscribed power-off event includes an event that the terminal is ready to power off, and in this case, the terminal is not powered off. In some examples, the subscribed power-off event includes an event that the user manually powers off the terminal and an event that the terminal is automatically powered off due to an insufficient battery level or another reason. In some other examples, the subscribed power-off event may include only an event that the terminal is automatically powered off due to an insufficient battery level or another reason, and does not include an event that the user manually powers off the terminal. It should be noted that, when the subscribed power-off events are different, technical effects achieved by the technical solutions of this application are different. Details are described in the following, and are not described herein.

S306: The power-on/off service returns a subscription success response to the service APP. This step is optional.

In some other examples, if the service management service in the REE module or the service management TA in the TEE module subscribes to the power-on/off event of the terminal from the power-on/off service in the REE module, a subscriber (the service management service or the service management TA) corresponding to the power-on/off service returns the subscription success response.

It should be noted that, in some other embodiments, the terminal may also set, by default, a card that can be used for a transaction after the terminal is powered off, or subscribe to the power-on/off event of the terminal. Alternatively, after detecting the power-on/off event, the power-on/off service automatically broadcasts the power-on/off event. In this case, the service APP may receive the broadcast power-on/off event. In other words, the terminal may alternatively not perform step S301 to step S304.

In this way, the terminal determines and stores the first card list based on the user setting and/or information about each added card in the terminal, and further subscribes to the power-on/off event of the terminal.

In some embodiments of this application, after the terminal determines the first card list, after the power-off event of the terminal is detected, and before the terminal is powered off, a status (including an activated state and an inactivated state) of each card are automatically switched based on the first card list, so that a card in the first card list can be used for a transaction after the terminal is powered off.

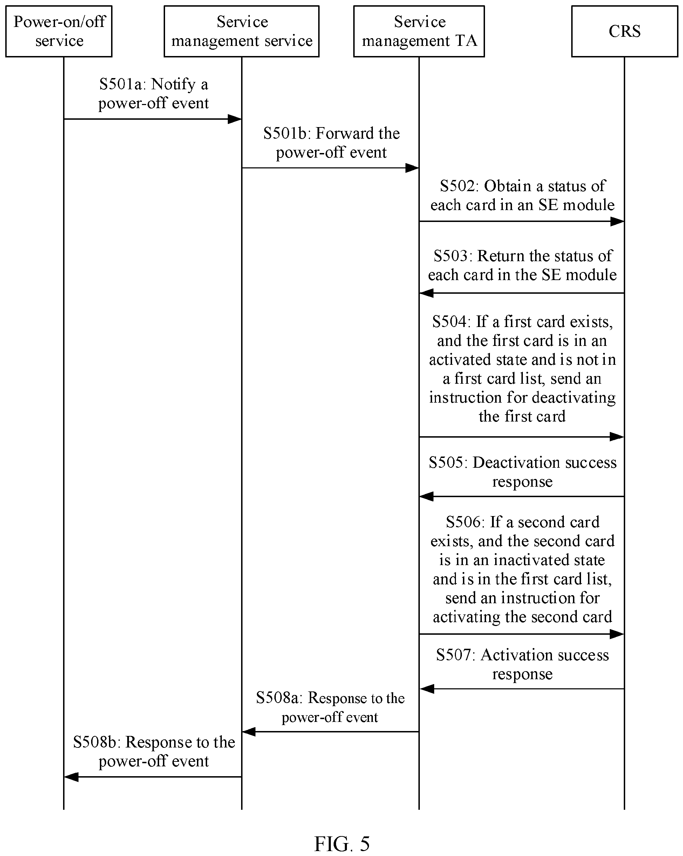

FIG. 5 is a schematic flowchart of a security service transaction method of a terminal according to an embodiment of this application. The method includes the following steps.

S501a: A power-on/off service in an REE module sends a power-off event to a service management service of the REE module.

After detecting the power-off event, the power-on/off service in the REE module sends the power-off event to a service management TA in a TEE by using the service management service in the REE module.

S501b: The service management service forwards the power-off event to the service management TA of the TEE module.

Step S501a and step S501b are described by using an example in which the service management service of the REE module subscribes to a power-on/off event of the terminal from the power-on/off service. It should be noted that in some other examples, the service management TA of the TEE module may directly subscribe to the power-on/off event of the terminal from the power-on/off service of the REE module. In this way, after detecting the power-off event, the power-on/off service of the REE module directly sends the power-off event to the service management TA of the TEE module. Alternatively, a service APP of the REE module subscribes to the power-on/off event of the terminal from the service APP of the REE module. In this way, after detecting the power-off event, the service APP of the REE module sends the power-off event to the service APP of the REE module. Then, the service APP of the REE module directly forwards the power-off event to the service management TA of the TEE module, or forwards the power-off event to the service management TA through the service management service of the REE module.

In some examples, the power-off event includes an event that power is off after a power-off instruction of a user is received (namely, a manual power-off event of the user) and an event that power is automatically off due to an insufficient battery level or another reason (namely, an automatic power-off event of the terminal). In this example, after the terminal is powered off due to different reasons, transaction scenarios of the terminal are the same, and user experience is the same. In some other examples, the power-off event includes only an event that power is automatically off due to an insufficient battery level or another reason, and does not include an event that power is off after a power-off instruction of a user is received (namely, a manual power-off event of the user). In other words, after the terminal is powered off due to different reasons, transaction scenarios of the terminal may be different. For example, if the user manually powers off the terminal, and the terminal executes the conventional technology, any card cannot be used for a transaction after the terminal is powered off, or only a default card can be used for a transaction after the terminal is powered off. If the terminal is automatically powered off due to an insufficient battery level, and the terminal performs the method provided in this embodiment of this application, a card in a first card list may be used for a transaction after the terminal is powered off. In this example, a case in which another user who illegally obtains the terminal uses some cards for transactions through active power-off can be avoided, to further improve transaction security of the terminal.

S502: After receiving the power-off event, the service management TA queries a status of each card in an SE module from a CRS of the SE module. The status of the card includes an activated state and an inactivated state.

S503: The CRS returns the status of each card in the SE module to the service management TA, and the service management TA stores the status of each card in this case, that is, stores a status that is of each card and that is before power off.

Optionally, the service management TA of the TEE module may further obtain and store other related information, for example, information about a default card, from the CRS or a COS. The default card is a card activated by default in the SE module. During specific implementation, the default card may be a specific card (like a transportation card or an access card) in the SE module, or may be a smart flash card. The smart flash card can automatically identify a scenario based on conditions such as a geographical location and a card reading device, and automatically activate a corresponding card.

It may be understood that, the service management TA stores the status of each card in the SE module in this case and other related information, so that during power on of the terminal again subsequently, the status of each card in the SE module is restored to the status that is of each card and that is before power off.

S504: Determine, based on the first card list, whether a first card exists, and if it is determined that the first card exists, the first card is a card that is in the SE module and that is currently in an activated state, and the first card is not in the first card list, the service management TA sends a deactivated (deactivated) first card to the CRS.

Deactivating the first card refers to canceling an activated state of the first card, so that the first card is in an inactivated state, and the first card cannot be used for a transaction. There are one or more first cards. When there are a plurality of first cards, the service management TA may send a deactivation instruction for all first cards one by one, that is, the service management TA sends a plurality of deactivation instructions to the CRS. Alternatively, the service management TA may send a deactivation instruction for all first cards, and the CRS deactivates all first cards one by one based on the deactivation instruction. A specific deactivation process is not limited in this embodiment of this application.

The service management TA of the TEE module determines the first card based on a status of each card in the SE module and the prestored first card list. It may be understood that, if the first card is not in the first card list, the first card is a card that the user does not expect to be used for a transaction after the terminal is powered off, but in this case, the first card is in an activated state. If the first card is not deactivated, after the terminal is powered off, the first card is still in an activated state, and the first card can still be used for a transaction. If the first card is a high-security service (for example, an access card for entering a secure area, or an electronic certificate including sensitive information), transaction may be performed after power off, and a security risk exists. Alternatively, the first card is a card that requires user authentication. After power off, neither the REE module nor the TEE module of the terminal works, user authentication cannot be performed, and the first card is also unavailable after power off. In addition, if a contactless parameter of the first card conflicts with that of a second card that needs to be activated subsequently, an activation failure may occur when the second card is activated subsequently. Therefore, in this embodiment of this application, the first card is deactivated to help ensure transaction security of the first card, and also help improve a transaction success rate of the second card after power off.

If a card is in an activated state, but the card is in the first card list, the card is a card that the user expects to be used for a transaction after the user is powered off. In this case, the service management TA does not need to change the status of the card. After the terminal is powered off, the card is in an activated state and can be used for a transaction.

In some other embodiments, if it is determined that the first card does not exist, subsequent step S506 is directly performed.

S505: After deactivating the first card, the CRS returns, to the service management TA, a response indicating that the first card is successfully deactivated.

S506: Determine, based on the first card list, whether the second card exists, and if it is determined that the second card exists, the second card is a card that is in the SE module and that is currently in an inactivated state, and the first card is in the first card list, the service management TA sends an activated second card to the CRS.

The service management TA of the TEE module determines the second card based on a status of each card in the SE module and the prestored first card list. There are one or more second cards. When there are a plurality of second cards, the service management TA may send an activation instruction for all second cards one by one, that is, the service management TA sends a plurality of activation instructions to the CRS. Alternatively, the service management TA may send an activation instruction for all second cards, and the CRS activates all the second cards one by one based on the activation instruction. A specific activation process is not limited in this embodiment of this application.

S507: The CRS returns, to the service management TA, a response indicating that the second card is successfully activated.

S508a: The service management TA returns a response to the power-off event to the service management service.

S508b: The service management service returns a response to the power-off event to the power-on/off service.

Step S508a and step S508b may be performed before or after step S502, or step S508a and step S508b may not be performed.

Then, after the terminal is powered off, a card (including a card that is in an activated state before the power-off event is received and the second card that is activated after the power-off event is received) in the first card list is in an activated state, and the card in the first card list is in an activated state after the terminal is powered off. It may be understood that, during power off of the terminal, the terminal with a remaining battery level may supply power to an NFC module and the SE module of the terminal, that is, the NFC module and the SE module of the terminal may still work. In this case, after the terminal is powered off, the NFC module of the terminal may still receive a transaction instruction (for example, an instruction for selecting the first card) of the card reading device, and a card in the first card list in the SE module of the terminal can be used for a transaction with the card reading device. Compared with the conventional technology in which any card cannot be used for a transaction after the terminal is powered off, or only a default card can be used for a transaction after the terminal is powered off, in this embodiment of this application, a plurality of cards can be used for transactions after the terminal is powered off, to meet a transaction requirement in a power-off scenario.

In addition, it should be noted that, when the terminal determines the first card list, a high-security service (for example, an access card for entering a secure area, a large-amount payment service that requires user authentication, or an electronic certificate including sensitive information) is excluded from the first card list based on a factor like card transaction security. Therefore, in this embodiment of this application, transaction security of cards in the first card list is improved after the terminal is powered off.

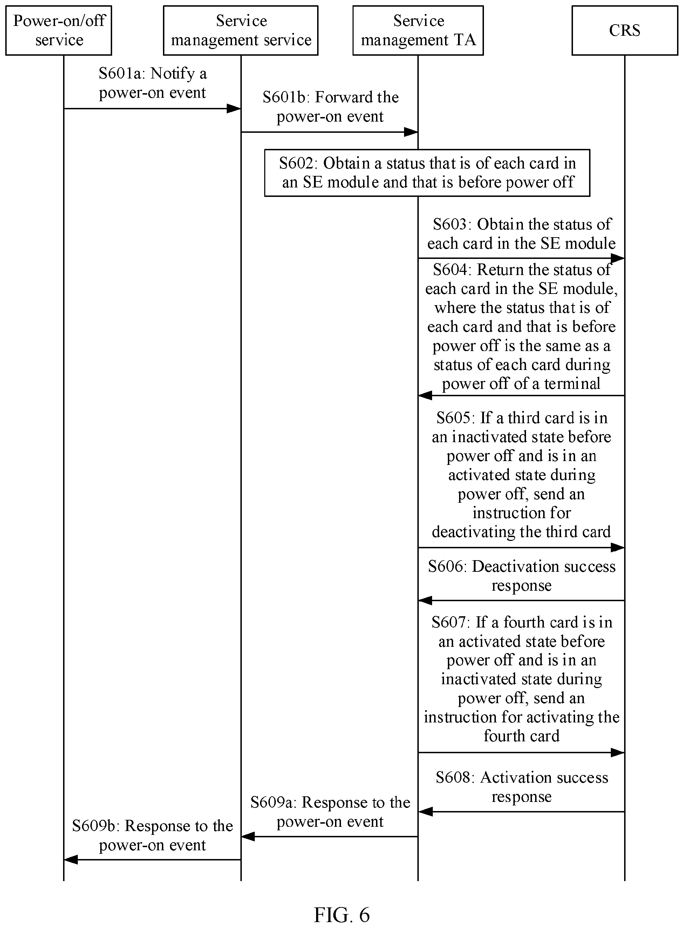

FIG. 6 is a schematic flowchart of a method for restoring, after a terminal is powered on again, a status that is of each card and that is before power off according to an embodiment of this application. The method includes the following steps.

S601a: A power-on/off service in an REE module sends a power-on event to a service management service of the REE module.

S601b: The service management service forwards the power-on event to a service management TA of a TEE module.

Step S601a and step S601b are described by using an example in which the service management service of the REE module subscribes to a power-on/off event of the terminal from the power-on/off service. It should be noted that in some other examples, the service management TA of the TEE module may directly subscribe to the power-on/off event of the terminal from the power-on/off service of the REE module. In this way, after detecting the power-on event, the power-on/off service of the REE module directly sends the power-on event to the service management TA of the TEE module. Alternatively, a service APP of the REE module subscribes to the power-on event of the terminal from the service APP of the REE module. In this way, after detecting the power-on event, the service APP of the REE module sends the power-on event to the service APP of the REE module. Then, the service APP of the REE module directly forwards the power-on event to the service management TA of the TEE module, or forwards the power-on event to the service management TA through the service management service of the REE module.

S602: The service management TA obtains a status that is of each card in the SE module and that is before power off. The status of the card includes an activated state and an inactivated state.

In step S503, the service management TA of the TEE module stores the status that is of each card in the SE module and that is before power off.

S603: After receiving the power-on event, the service management TA queries the status of each card in the SE module from a CRS of the SE module.

It should be noted that step S603 and step S602 may be performed simultaneously, or step S603 may be performed after or before step S602. A sequence of performing step S603 and step S602 is not limited in this application.

S604: The CRS returns the status of each card in the SE module to the service management TA.

It may be understood that, because the terminal is just powered on in this case, the status of each card in the SE module that is queried in this case is the same as a status of each card during power off of the terminal.

In some other examples, the terminal may determine, based on the first card list, the status of each card during power off of the terminal. For example, a card in the first card list is in an activated state during power off, and a card that is not in the first card list is in an inactivated state during power off. In other words, the terminal may alternatively not perform step S603 and step S604.

S605: If a third card is in an inactivated state before power off and is in an activated state during power off, the service management TA sends a deactivated third card to the CRS.

It may be understood that, in this case, the third card is the same as the second card in step S506.

S606: The CRS returns, to the service management TA, a response indicating that the third card is successfully deactivated.

S607: If a fourth card is in an activated state before power off and is in an inactivated state during power off, the service management TA sends an activated fourth card to the CRS.

It may be understood that the fourth card in this step is the same as the first card in step S504.

S608: The CRS returns, to the service management TA, a response indicating that the fourth card is successfully activated.

S609a: The service management TA returns a response to the power-on event to the service management service.

Optionally, in some examples, after receiving the response that is returned by the CRS and that indicates that the fourth card is successfully activated, the service management TA further clears a status that is of each card during power off and that is stored in the service management TA, related information, and the like.

S609b: The service management service returns a response to the power-on event to the power-on/off service.

Step S609a and step S609b may be performed before or after step S602, or step S609a and step S609b may not be performed.

It can be learned that, after the terminal is powered on again, each card in the SE module is restored to a status that is before power off. This retains an operation habit of a user during power-on, and avoids confusion of the user during use.

Technical solutions of this application are described herein with reference to a specific application scenario.

The specific application scenario is as follows: A transportation card, a bank card, a vehicle key, a door key, an access card, and a payment card have been added to the terminal, and a currently activated card of the terminal is the transportation card.

In the conventional technology, after a terminal is powered off, an activated state of each card before the terminal is powered off is retained, that is, only the transportation card is in an activated state, and the resting cards are in an inactivated state. In this case, after power off, in the terminal, only the transportation card can be used for a transaction, and the resting cards cannot be used for a transaction.

Alternatively, after the terminal is powered off, activated states of all cards are canceled. In this case, after power off, all the cards in the terminal cannot be used for transactions.

Technical solution 1 of this application: In the interface shown in FIG. 4(2), a user sets the transportation card and the vehicle key as cards that can be used for transactions after power off, to be specific, a first card list includes the transportation card and the vehicle key. The bank card and the payment card are cards that cannot be used for transactions by default in a terminal system after the terminal is powered off. If the user sets the bank card or the payment card as a card that can be used for a transaction in the terminal after the terminal is powered off, the terminal sends a prompt, to prohibit the bank card or electronic support from being set as a card that can be used for a transaction after power off.

When it is detected that the terminal is manually powered off by the user, or the terminal is automatically powered off due to a reason like an insufficient battery level, the terminal records states that are of the cards and that are before power off as the following: The vehicle key is in an activated state, and other cards are in an inactivated state. If the terminal finds that the card that is currently in an activated state (namely, the vehicle key) is not in the first card list, the terminal cancels the activated state of the vehicle key. Further, if the terminal finds that all transportation cards in the first card list are in an inactivated state, the terminal activates the transportation cards. After the terminal is powered off, the transportation card and the vehicle key in the terminal are still in an activated state, and the resting cards are in an inactivated state. In this case, the transportation card and the vehicle key in the terminal can be used for transactions, and the resting cards cannot be used for transactions.

After the terminal is powered on again, the terminal restores to an original state based on a stored state that is of each card and that is before the terminal is powered off, that is, the vehicle key is in an activated state, and the resting cards are in an inactivated state.

Technical solution 2 of this application: Compared with the technical solution 1, in the technical solution 2, only the power-off event subscribed by the terminal includes only that the terminal is automatically powered off due to a reason like an insufficient battery level. Therefore, transaction scenarios of the terminal are different in different power-off scenarios. In an example, as shown in FIG. 4(2), the power-off event that the user may choose to subscribe to includes automatic power-off due to a reason like an insufficient battery level, and does not include a manual power-off event of the user.

Scenario 1: When it is detected that the user manually powers off the terminal, the conventional technology may be used for processing of the terminal, and a technical effect is the same as that in the conventional technology. That is, after the terminal is powered off, only the vehicle key can be used for a transaction, and the resting cards cannot be used for transactions. Alternatively, all the cards in the terminal cannot be used for transactions.

Scenario 2: When it is detected that the terminal is automatically powered off due to a reason like an insufficient battery level, processing of the terminal is the same as that in the technical solution 1, and a technical effect is also the same as that in the technical solution 1. That is, after the terminal is powered off, the transportation card and the vehicle key in the terminal are still in an activated state, and the resting cards are in an inactivated state. In this case, the transportation card and the vehicle key in the terminal can be used for transactions, and the resting cards cannot be used for transactions.

After the terminal is powered on again, the terminal restores to an original state based on a stored state that is of each card and that is before the terminal is powered off, that is, the vehicle key is in an activated state, and the resting cards are in an inactivated state.

It may be understood that, it can be learned from a comparison between the technical solution 1 and the technical solution 2 that, in the technical solution 2, a case in which another user who illegally obtains the terminal uses, through active power-off, some cards for transactions after the terminal is powered off can be avoided, to further improve transaction security of the terminal.

In some other embodiments, the SE module may further include some cards having two or more working modes. The terminal may control such cards to be in different working modes during power on of the terminal and during power off of the terminal, to meet different transaction requirements of the user.

For example, a payment card may work in a mode 2 during power on of the terminal. In the mode 2, the card may be used for a large-amount transaction under user authentication, to ensure transaction security. A manner of the user authentication includes facial data authentication, fingerprint feature authentication, password authentication, or the like. The payment card may also work in a mode 1 during power off of the terminal. In the mode 1, the card may be used for a small-amount transaction without user authentication, and in the mode 1, password-free payment may be performed without user authentication, to meet a payment requirement of a user after the terminal is powered off.

For another example, the access card may work in a mode b during power on of the terminal, and in the mode b, a secure area and a common area may be entered through the access card. The access card may work in a mode a during power off of the terminal, and in the mode a, only a common area can be entered through the access card.

An office scenario is used as an example. In an office environment, an entrance hall or a lounge can be set as a common area, and an office cubicle area and a conference room can be set as secure areas. When a mobile phone of an employee is powered on, an access card in the mobile phone works in the mode b. The access card is in an inactivated state when a user is not authenticated. When the employee uses the mobile phone to swipe a card reader in the lounge, the mobile phone prompts the user to perform authentication. After the user is authenticated, the access card is in an activated state. The access card interacts with the card reader in the lounge. A door of the lounge is unlocked, and the user can enter the lounge. After a preset time period or after the user exits a service app, the access card is restored to an inactivated state. When the employee uses the mobile phone to swipe a card reader in the conference room, the mobile phone prompts the user to perform authentication. After the user is authenticated, the access card is in an activated state. The access card interacts with the card reader in the conference room. A door of the conference room is unlocked, and the user can enter the conference room. After a preset time period or after the user exits a service app, the access card is restored to an inactivated state.

After the mobile phone of the employee is powered off, the access card in the mobile phone works in the mode a, and the user does not need to perform authentication. The access card is in an activated state. When the employee uses the mobile phone to swipe the card reader in the lounge, the access card interacts with the card reader in the lounge. The card reader in the lounge determines that the access card works in the mode a, the door of the lounge is unlocked, and the user can enter the lounge. When the employee uses the mobile phone to swipe the card reader in the conference room, the access card interacts with the card reader in the conference room. The card reader in the conference room determines that the access card works in the mode a and refuses to unlock the door of the conference room. The user cannot enter the conference room.

For another example, an electronic certificate may work in a mode 1 during power on of the terminal, and in the mode 1, the electronic certificate may provide sensitive information and non-sensitive information. The electronic certificate may work in a mode 2 during power off of the terminal, and in the mode 2, the electronic certificate provides only non-sensitive information. The sensitive information includes information like a name, an identity card number, and a bank card number of the user. The non-sensitive information includes information like a membership card number, user gender, user birthday, and card processing time.

Therefore, after detecting a power-off event, the terminal needs to activate a card that can be used for a transaction after power off, and further needs to switch a card having a plurality of working modes to a preset mode after power off.

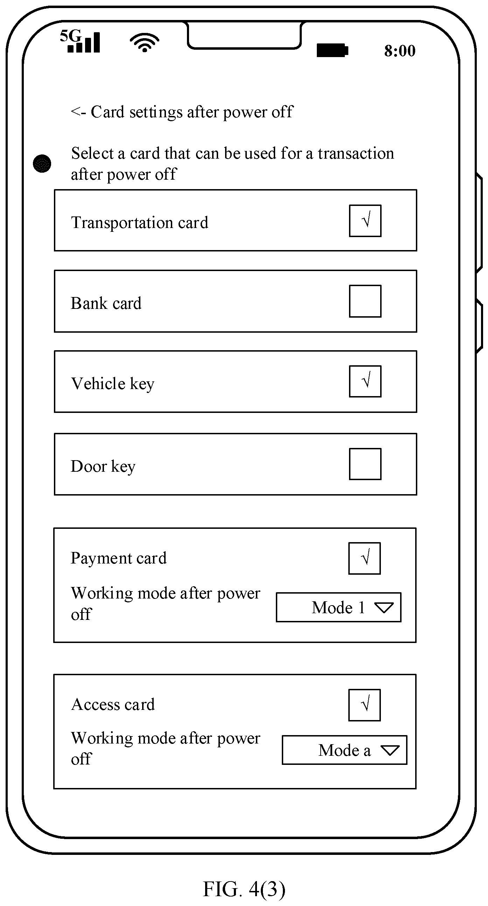

In an example, the terminal (for example, a service management TA in a TEE module) further needs to store a second card list, and the second card list includes information about a card that needs to work in the preset mode after power off. In some examples, a card in the second card list is also a card that can be used for a transaction after power off, namely, a card in the first card list. In other words, a card set in the second card list is a subset of a card set in the first card list. In some specific examples, the user may set a card that needs to be switched to the preset mode after the power is off. For example, the service APP provides an interface shown in FIG. 4(3). After cards each having a plurality of working modes are set to cards that can be used for transactions after power off, the user may set preset modes that are of the cards and that are after power off. For example, a working mode of a payment card after power off is set to the mode 1, and a working mode of an access card after power off is set to the mode a. Then, the service APP determines the second card list based on a received user setting, and forwards the second card list to the service management TA in the TEE module. In some other specific examples, the terminal may further automatically determine the second card list. For example, the terminal determines whether the first card list includes a card having a plurality of working modes. If there is a card having a plurality of working modes, it is directly determined that the card is a card that needs to be switched to a preset mode after power off, and the preset mode of each card after power off is determined. It may be understood that cards in the first card list are cards that can be used for transactions after power off. If the cards have a plurality of working modes, the cards need to be switched to preset modes during power off. One of the plurality of working modes of each card may be determined as the preset mode based on a factor like card transaction security, and the preset mode meets a transaction requirement that is after the terminal is powered off. In some examples, a preset mode that meets a transaction requirement that is after the terminal is powered off may also be referred to as a low-risk mode. For other content of the second card list, refer to descriptions of related content of the first card list. Details are not described herein again. For example, the first card list includes a transportation card, a vehicle key, a payment card, and an access card. The second card list includes the payment card and the access card, and a preset mode of the payment card after power off or after a battery level of the terminal is less than a preset threshold is a mode 1, and a preset mode of the access card after power off or after a battery level of the terminal is less than a preset threshold is a mode a.

It should be further noted that the first card list and the second card list may be two independent lists. The first card list includes information about a card that can be used for a transaction after power off. The second card list includes information about a card that needs to be in a preset mode after power off. It may be understood that cards in the first card list include cards in the second card list. Certainly, the first card list and the second card list may also be a same list. The list (namely, the first card list) includes all cards that can be used for transactions after power off. A card that needs to work in the preset mode after power off is marked (that is, a card in the second card list is marked). Forms of the first card list and the second card list are not limited in this embodiment of this application. In the following embodiment, an example in which the first card list and the second card list are two different lists is used for description.

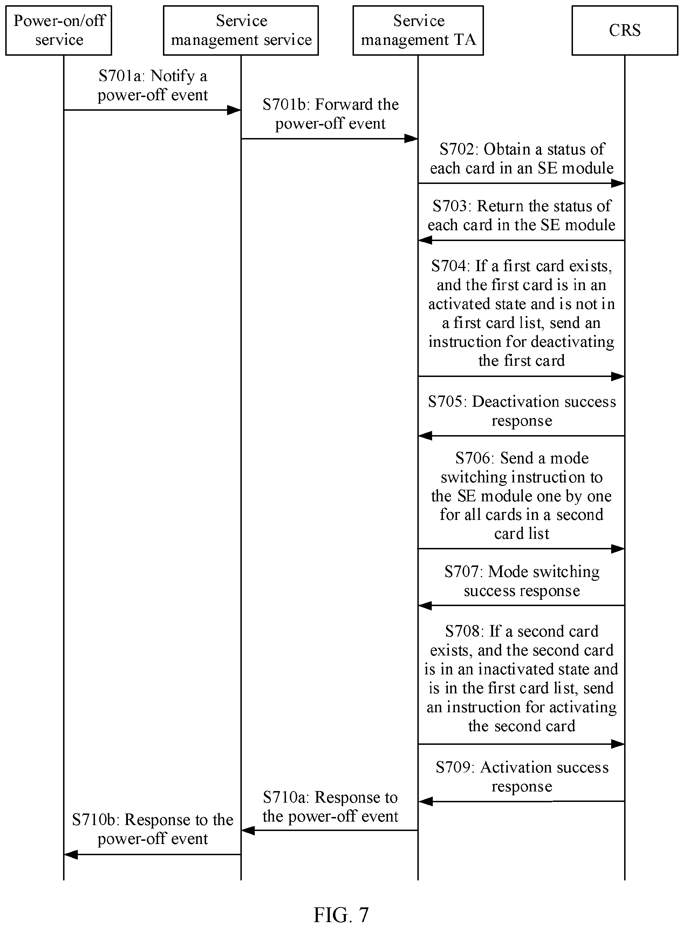

FIG. 7 is a schematic flowchart of another security service transaction method according to an embodiment of this application. The method includes the following steps.

S701a: A power-on/off service in an REE module sends a power-off event to a service management service of the REE module.

S701b: The service management service forwards the power-off event to a service management TA of a TEE module.

Step S701a and step S701b are described by using an example in which the service management service of the REE module subscribes to a power-on/off event of a terminal from the power-on/off service. For other content, refer to related content in step S501a and step S501b.

In some examples, the power-off event includes an event that power is off after a power-off instruction of a user is received (namely, a manual power-off event of the user) and an event that is of the user and that power is automatically off due to an insufficient battery level or another reason. In this example, after the terminal is powered off due to different reasons, transaction scenarios of the terminal are the same, and user experience is the same. In some other examples, the power-off event includes only an event that power is off after a power-off instruction of a user is received (namely, a manual power-off event of the user). In other words, after the terminal is powered off due to different reasons, transaction scenarios of the terminal may be different. For example, if the user manually powers off the terminal, and the terminal executes the conventional technology, any card cannot be used for a transaction after the terminal is powered off, or only a default card can be used for a transaction after the terminal is powered off. If the terminal is automatically powered off due to an insufficient battery level, and the terminal performs the method provided in this embodiment of this application, a card in a first card list may be used for a transaction after the terminal is powered off. In this example, a case in which another user who illegally obtains the terminal uses some cards for transactions through active power-off can be avoided, to further improve transaction security of the terminal.

S702: After receiving the power-off event, the service management TA queries a status of each card in an SE module from a CRS of the SE module. The status of the card includes an activated state and an inactivated state.

S703: The CRS returns the status of each card in the SE module to the service management TA.

The service management TA of the TEE module stores the status of each card in this case, that is, stores a status that is of each card and that is before power off.

Optionally, the service management TA of the TEE module may further obtain and store other related information from the SE module, for example, information about a default card. The default card is a card activated by default in the SE module. During specific implementation, the default card may be a specific card (like a transportation card or an access card) in the SE module, or may be a smart flash card. The smart flash card can automatically identify a scenario based on conditions such as a geographical location and a card reading device, and automatically activate a corresponding card.

In some other embodiments, if the terminal obtains the status of each card when performing step S703, the terminal further obtains a mode of each card, so that the terminal subsequently determines whether a card needs to be switched to a specified mode.

It may be understood that, the service management TA stores the status of each card in the SE module in this case and other related information, so that during power on subsequently, the status of each card in the SE module is restored to the status that is of each card and that is before power off.

S704: If it is determined that a first card exists, the first card is a card that is in the SE module and that is currently in an activated state, and the first card is not in the first card list, the service management TA sends a deactivated first card to the CRS.

Deactivating the first card refers to canceling an activated state of the first card, so that the first card is in an inactivated state, and the first card cannot be used for a transaction. There are one or more first cards. When there are a plurality of first cards, the service management TA may send a deactivation instruction for all first cards one by one, that is, the service management TA sends a plurality of deactivation instructions to the CRS. Alternatively, the service management TA may send a deactivation instruction for all first cards, and the CRS deactivates all first cards one by one based on the deactivation instruction. A specific deactivation process is not limited in this embodiment of this application.

In some other embodiments, if it is determined that the first card does not exist, subsequent step S706 is directly performed.

S705: The CRS returns, to the service management TA, a response indicating that the first card is successfully deactivated.

S706: The service management TA sends, to the CRS one by one for all cards in a second card list, an instruction for switching to a preset mode.

The second card list includes one or more cards that need to be switched to the preset mode. In some embodiments, a card in the second card list is in the first card list. In other words, the card in the second card list is a card that can be used for a transaction after power off. In this case, in the first card list, a card (that is, the card in the second card list) that needs to be switched to a preset mode is switched to the preset mode. It may be understood that if a card A in the second card list is in an activated state in this case, this step is performed to switch the card A to a preset mode. After the terminal is powered off, the card A can be used for a transaction. If a card B in the second card list is in an inactivated state in this case, this step is first performed to switch the card B to a preset mode, and then step S708 is performed to activate the card B. After the terminal is powered off, the card B can be used for a transaction.

During specific implementation, each card that needs to be switched to a preset mode defines a private mode switching instruction of each card. In this case, the service management TA in the TEE module sends, for all cards in the second card list one by one, a corresponding instruction for switching to a preset mode.

In some other embodiments, if the terminal obtains the status of each card when performing step S703, the terminal further obtains a mode of each card. In this case, the terminal may also determine whether each card in the second card list is in the preset mode. For a card in the second card list that is already in the preset mode, the terminal does not need to send an instruction for switching to the preset mode. For a card that is not in the second card list and that is not in the preset mode, the terminal needs to send a corresponding instruction for switching to the preset mode.

It should be noted that step S706 and step S704 may be performed simultaneously, or step S706 may be performed after or before step S704. A sequence of performing step S706 and step S704 is not limited in this embodiment of this application.

S707: The CRS returns a mode switching success response to the service management TA.

S708: If it is determined that a second card exists, the second card is a card that is in the SE module and that is currently in an inactivated state, and the first card is in the first card list, the service management TA sends an instruction for activating the second card to the CRS.

After all cards that need a card switching mode in the second card list are successfully switched, the service management TA of the TEE module sends an instruction for activating the second card to the CRS of the SE module. There are one or more second cards. When there are a plurality of second cards, the service management TA may send an activation instruction for all second cards one by one, that is, the service management TA sends a plurality of activation instructions to the CRS. Alternatively, the service management TA may send an activation instruction for all second cards, and the CRS activates all second cards one by one based on the activation instruction. A specific activation process is not limited in this embodiment of this application.

It should be noted that, in this case, a card that is in the first card list and that is currently in an inactivated state needs to be activated. That is, a card that is not in the second card list but is in the first card list and that is currently in an inactivated state is activated; and a card that is in the second card list and is currently in an inactivated state is activated. In other words, for the card that is in the second card list and that is currently in an inactivated state, the card is first switched to a preset mode, and then the card is activated. It may be understood that, for a card that is in the second card list and that is currently in an activated state, only the card needs to be switched to a specified mode, and an activation operation does not need to be performed.

S709: The CRS returns, to the service management TA, a response indicating that the second card is successfully activated.

S710a: The service management TA returns a response to the power-off event to the service management service.

S710b: The service management service returns a response to the power-off event to the power-on/off service.

Step S710a and step S710b may be performed before or after step S702, or step S710a and step S710b may not be performed.

It can be learned that, after the terminal is powered off, the card in the second card list is switched to a preset mode (a working mode during power off). This ensures that the card in the second card list can be used for a transaction after power off. The card in the second card list works in the preset mode. This ensures card transaction security. In this embodiment, cards that can be used for transactions after the terminal is powered off are enriched, and transaction requirements in more power-off scenarios are met.

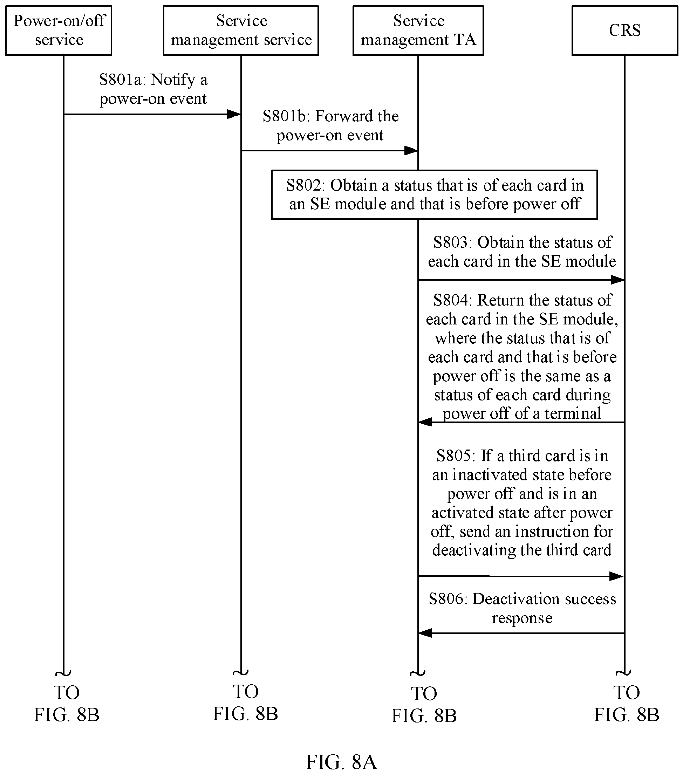

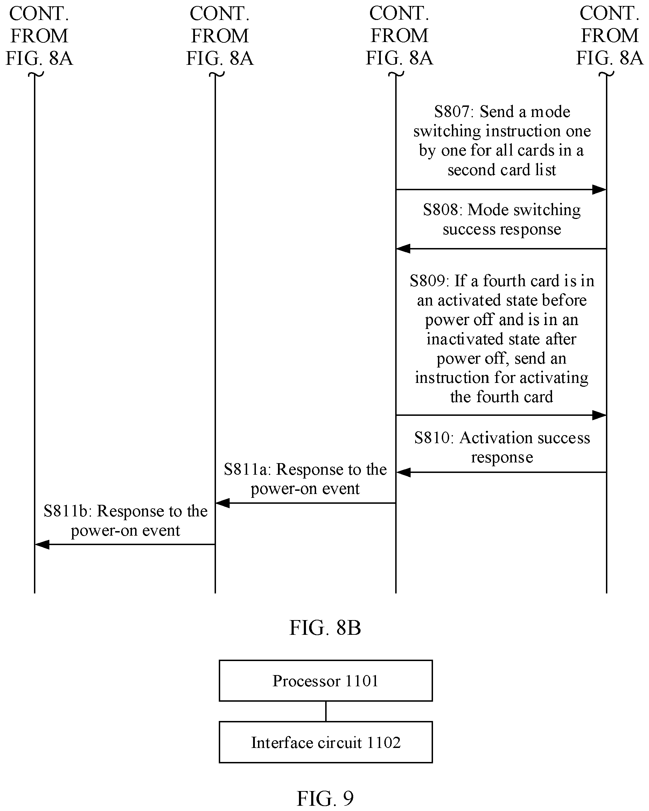

FIG. 8A and FIG. 8B are a schematic flowchart of another method for restoring, after a terminal is powered on again, a status that is of each card and that is before power off according to an embodiment of this application. The method includes the following steps.

S801a: A power-on/off service in an REE module sends a power-on event to a service management service of the REE module.

S801b: The service management service forwards the power-on event to a service management TA.

Step S801a and step S801b are described by using an example in which the service management service of the REE module subscribes to a power-on/off event of the terminal from the power-on/off service. It should be noted that in some other examples, the service management TA of the TEE module may directly subscribe to the power-on/off event of the terminal from the power-on/off service of the REE module. In this way, after detecting the power-on event, the power-on/off service of the REE module directly sends the power-on event to the service management TA of a TEE module. Alternatively, a service APP of the REE module subscribes to the power-on event of the terminal from the service APP of the REE module. In this way, after detecting the power-on event, the service APP of the REE module sends the power-on event to the service APP of the REE module. Then, the service APP of the REE module directly forwards the power-on event to the service management TA of the TEE module, or forwards the power-on event to the service management TA through the service management service of the REE module.

S802: The service management TA obtains a status that is of each card in an SE module and that is before power off. The status of the card includes an activated state and an inactivated state.

In step S703, the service management TA of the TEE module stores the status that is of each card in the SE module and that is before power off.

S803: After receiving the power-on event, the service management TA queries the status of each card in the SE module from a CRS of the SE module.

It should be noted that step S803 and step S802 may be performed simultaneously, or step S803 may be performed after or before step S802. A sequence of performing step S803 and step S802 is not limited in this application.

S804: The CRS returns the status of each card in the SE module to the service management TA.

It may be understood that, because the terminal is just powered on in this case, the status of each card in the SE module that is queried in this case is the same as a status that is of each card and that is before the terminal is powered on (that is, after power off).

In some other examples, the terminal may determine, based on a first card list, a status that is of each card and that is after the terminal is powered off. For example, a card in the first card list is in an activated state after power off, and a card that is not in the first card list is in an inactivated state after power off. In other words, the terminal may alternatively not perform step S803 and step S804.

S805: If a third card is in an inactivated state before power off and is in an activated state after power off, the service management TA sends an instruction for deactivating the third card to the CRS.

It may be understood that, in this case, the third card is the same as the second card in step S708. That the third card is in the first card list includes that the third card is in a second card list (that is, a card that works in a preset mode after power off), and that the third card is not in the second card list but in the first card list. There are one or more third cards.

S806: The CRS returns, to the service management TA, a response indicating that the third card is successfully deactivated.

S807: The service management TA sends a mode switching instruction to the CRS one by one for all cards in the second card list.

S808: The CRS returns a mode switching success response to the service management TA.

S809: If a fourth card is in an activated state before power off and is in an inactivated state after power off, the service management TA sends an instruction for activating the fourth card to the SE module.

It may be understood that the fourth card in this step is the same as the first card in step S704. The fourth card is not in the first card list. There are one or more fourth cards.

S810: The CRS returns, to the service management TA, a response indicating that the fourth card is successfully activated.

S811a: The service management TA returns a response to the power-on event to the service management service.

Optionally, in some examples, after receiving the response that is returned by the SE module and that indicates that the fourth card is successfully activated, the service management TA of the TEE module may also clear a status that is of each card after power off and that is stored in the service management TA of the TEE module, related information, and the like.

S811b: The service management service returns a response to the power-on event to the power-on/off service.

Step S811a and step S811b may be performed before or after step S802, or step S8011a and step S8011b may not be performed.

It can be learned that, after the terminal is powered on again, each card in the SE module is restored to a status that is before power off. This retains an operation habit of a user during power-on, and avoids confusion of the user during use.

The technical solutions of this application are described herein again with reference to a specific application scenario.

With reference to the foregoing application scenario: Added cards in the terminal include a transportation card, a bank card, a vehicle key, a door key, a payment card, and an access card. Currently activated cards of the terminal are the vehicle key and the access card.

In the conventional technology, after a terminal is powered off, an activated state of each card before the terminal is powered off is retained, that is, only the vehicle key and the access card are in an activated state, and the resting cards are in an inactivated state. In this case, after power off, in the terminal, only the vehicle key and the access card can be used for a transaction, and the resting cards cannot be used for a transaction.

Alternatively, after the terminal is powered off, activated states of all cards are canceled. In this case, after power off, all the cards in the terminal cannot be used for transactions.

Technical solution 3 of this application: In the interface shown in FIG. 4(3), a user sets a transportation card, a vehicle key, a payment card, and an access card as cards that can be used for transactions after power off, to be specific, a first card list includes the transportation card, the vehicle key, the payment card, and the access card.

The payment card has a plurality of modes. One mode supports a large-amount payment function with user authentication, and another mode supports a small-amount payment function without authentication. In this case, the terminal determines that during power off, the payment card needs to be switched to a preset mode, namely, a mode of a small-amount payment function without authentication (the mode 1 in the figure). The access card has a plurality of modes. One mode supports entering a secure area and a common area, and another mode supports entering the common area and does not support entering the secure area. In this case, the terminal determines that during power off, the access card needs to be switched to a preset mode that supports entering a common area and does not support entering a secure area (the mode a in the figure). To be specific, a second card list includes the payment card and the access card.

When it is detected that the terminal is manually powered off by the user, or the terminal is automatically powered off due to a reason like an insufficient battery level, the terminal records a status that is of a card and that is before power off as follows: The vehicle key is in an activated state, other cards are in an inactivated state, the access card is in a mode b, and the payment card is in a mode 2. If the terminal finds that a card that is currently in an activated state (namely, the vehicle key) is not in the first card list, the terminal cancels the activated state of the vehicle key. If the access card is currently in an activated state, because the access card is in the first card list, the activated state of the access card is retained. If the access card is currently in an inactivated state, because the access card is in the first card list, an activated state of the access card does not need to be adjusted.

Further, the terminal switches a mode of the payment card to a preset mode based on the second card list. That is, the mode of the payment card is switched from the mode 2 to the mode 1, and a mode of the access card is switched from the mode b to the mode a. Then, the terminal finds a card that is currently in an inactivated state. However, the access card, the payment card, the transportation card, and the vehicle key in the first card list are all in an inactivated state. In this case, the terminal activates the access card, the payment card, the transportation card, and the vehicle key. After the terminal is powered off, the access card, the payment card, the transportation card, and the vehicle key in the terminal are still in an activated state, the payment card is in the preset mode (mode 1), the access card is in a preset mode (the mode a), and the resting cards are in an inactivated state. In this case, the access card, the payment card, the transportation card, and the vehicle key in the terminal may be used for transactions. The payment card may be used for only a small-amount payment transaction without authentication, the access card can be used only for entering a common area, and the resting cards cannot be used for transactions.

After the terminal is powered on again, the terminal restores to an original state based on a stored state that is of each card and that is before the terminal is powered off, that is, the vehicle key and the access card are in an activated state, and other cards are in an inactivated state. The access card is switched back to the mode b, and the payment card is switched back to the mode 2.

Technical solution 4 of this application: Compared with the technical solution 3, in the technical solution 4, only the power-off event subscribed by the terminal includes only that the terminal is automatically powered off due to a reason like an insufficient battery level. Therefore, transaction scenarios of the terminal are different in different power-off scenarios.

Scenario 3: When it is detected that the user manually powers off the terminal, the conventional technology may be used for processing of the terminal, and a technical effect is the same as that in the conventional technology. That is, after the terminal is powered off, only the vehicle key can be used for a transaction, and the resting cards cannot be used for transactions. Alternatively, all the cards in the terminal cannot be used for transactions.

Scenario 4: When it is detected that the terminal is automatically powered off due to a reason like an insufficient battery level, processing of the terminal is the same as that in the technical solution 3, and a technical effect is also the same as that in the technical solution 3. That is, after the terminal is powered off, the access card, the payment card, the transportation card, and the vehicle key in the terminal are still in an activated state, the payment card is in the preset mode (mode 1), the access card is in a preset mode (the mode a), and the resting cards are in an inactivated state. In this case, the access card, the payment card, the transportation card, and the vehicle key in the terminal may be used for transactions. The payment card may be used for only a small-amount payment transaction without authentication, the access card can be used only for entering a common area, and the resting cards cannot be used for transactions.

After the terminal is powered on again, the terminal restores to an original state based on a stored state that is of each card and that is before the terminal is powered off, the vehicle key and the access card are in an activated state, other cards are in an inactivated state, the access card is switched back to the mode b, and the payment card is switched back to the mode 2.

It may be understood that, it can be learned from a comparison between the technical solution 3 and the technical solution 4 that, in the technical solution 4, a case in which another user who illegally obtains the terminal uses, through active power-off, some cards for transactions after the terminal is powered off can be avoided, to further improve transaction security of the terminal.

In addition, compared with the technical solution 1 and the technical solution 2, the technical solution 3 and the technical solution 4 add processing of switching a card having a plurality of working modes to a preset mode. This enriches transaction scenarios of cards in the terminal, and meets more transaction requirements after the terminal is powered off.

In some other embodiments, the first trigger event may also be an event that a battery level of the terminal is less than a preset threshold, and the second trigger event may also be an event that the battery level of the terminal is greater than or equal to the preset threshold. In an example, the battery level detection service in the trigger event detection module may be specifically used to detect the first trigger event and the second trigger event.

The terminal may automatically set a first card list or determine a first card list based on a user setting. The first card list includes information about a card that supports a transaction when the battery level of the terminal is less than the preset threshold. For example, when the battery level of the terminal is less than the preset threshold, a card that does not require user authentication in the SE module may be selected. It may be understood that, when the card that does not require user authentication may not pass through the TEE module and the REE module during a transaction. This helps reduce power consumption of the terminal and prolong standby duration of the terminal. Optionally, the terminal may further determine a second card list. The second card list includes information about a card that supports a transaction in the preset mode when the battery level of the terminal is less than the preset threshold. In other words, when the battery level of the terminal is less than the preset threshold, the terminal further needs to switch a working mode of a card in the second card list to the preset mode. In an example, a card set in the second card list is a subset of a first card list set.

When the terminal detects that the battery level of the terminal is less than the preset threshold, the terminal deactivates, based on the first card list, a card that is currently in an activated state but is not in the first card list, and then activates a card that is currently in an inactivated state but is in the first card list. Optionally, before the terminal activates the card that is currently in an inactivated state but is in the first card list, the terminal further separately switches cards in the second card list to preset modes based on the second card list. When the terminal detects that the battery level of the terminal is greater than or equal to the preset threshold, the terminal restores a status of each card to a status that is before the terminal detects that the battery level of the terminal is less than the preset threshold. Optionally, a working mode of each card is also switched back to a working mode that is before that the battery level of the terminal is less than the preset threshold is detected. For other content, refer to descriptions of related content in the foregoing embodiment. Details are not described herein again.

An embodiment of this application further provides a chip system. As shown in FIG. 9, the chip system includes at least one processor 1101 and at least one interface circuit 1102. The processor 1101 and the interface circuit 1102 may be interconnected through a line. For example, the interface circuit 1102 may be configured to receive a signal from another apparatus (for example, a memory of a terminal 100). For another example, the interface circuit 1102 may be configured to send a signal to another apparatus (for example, the processor 1101). For example, the interface circuit 1102 may read instructions stored in a memory, and send the instructions to the processor 1101. When the instructions are executed by the processor 1101, a terminal may be enabled to perform steps performed by the terminal 100 (for example, a mobile phone) in the foregoing embodiment. Certainly, the chip system may further include another discrete device. This is not specifically limited in this embodiment of this application.

An embodiment of this application further provides an apparatus. The apparatus is included in a terminal, and the apparatus has a function of implementing behavior of the terminal in any method in the foregoing embodiments. This function may be implemented by hardware, or may be implemented by executing corresponding software by hardware. The hardware or the software includes at least one module or unit corresponding to the foregoing function. For example, a detection module or unit, a display module or unit, a determining module or unit, and a calculation module or unit.

An embodiment of this application further provides a computer storage medium, including computer instructions. When the computer instructions are run on a terminal, the terminal is enabled to perform any method in the foregoing embodiment.

An embodiment of this application further provides a computer program product. When the computer program product runs on a computer, the computer is enabled to perform any method in the foregoing embodiment.

An embodiment of this application further provides a graphical user interface on a terminal. The terminal has a display, a camera, a memory, and one or more processors. The one or more processors are configured to execute one or more computer programs stored in the memory. The graphical user interface includes a graphical user interface displayed when the terminal performs any method in the foregoing embodiment.

It may be understood that, to implement the foregoing functions, the terminal or the like includes a corresponding hardware structure and/or a corresponding software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed in a manner of hardware or computer software driving hardware depends on a specific application and a design constraint condition of the technical solution. A person skilled in the art may use different methods for each specific application to implement the described functions. However, it should not be considered that the implementation goes beyond the scope of embodiments of the present invention.

In this embodiment of this application, the terminal and the like may be divided into functional modules based on the foregoing method examples. For example, each functional module may be obtained through division based on each corresponding function, or two or more functions may be integrated into one processing module. The foregoing integrated module may be implemented in a form of hardware, or may be implemented in a form of a software functional module. It should be noted that module division in this embodiment of the present invention is an example, and is merely logical function division. In an actual implementation, there may be another division manner.

The foregoing descriptions about implementations allow a person skilled in the art to understand that, for a purpose of convenient and brief description, division of the foregoing functional modules is taken as an example for illustration. During actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

The functional units in embodiments of this application may be integrated into one processing unit, each of the units may exist alone physically, or two or more units are integrated into one unit. The integrated unit may be implemented in a form of hardware, or may be implemented in a form of a software functional unit.

If the integrated unit is implemented in a form of a software functional unit and is sold or used as an independent product, the integrated unit may be stored in a computer-readable storage medium. Based on such an understanding, the technical solutions of embodiments of this application essentially, or part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disk.

The foregoing descriptions are merely specific implementations of this application, but are not intended to limit the protection scope of this application. Any variation or replacement within a technical scope disclosed in this application shall fall within the protection scope of this application. Therefore, the protection scope of this application shall be subject to the protection scope of the claims.

## Claims

1. A card switching method, applied to a terminal, wherein the terminal comprises a first card list, and the first card list comprises information about a card that is set to support a transaction during power off of the terminal or when a battery level of the terminal is less than a preset threshold; a first card in the terminal is in an inactivated state when the terminal is in a power-on state or the battery level of the terminal is greater than or equal to the preset threshold; and the method comprises:
switching, by the terminal, the first card to an activated state after the terminal detects a power-off event or that the battery level of the terminal is less than the preset threshold, wherein the first card list comprises the first card.

2. The method according to claim 1, wherein the terminal further comprises a second card; the second card is in an activated state when the terminal is in a power-on state or the battery level of the terminal is greater than or equal to the preset threshold; and
before the switching, by the terminal, the first card to an activated state after the terminal detects a power-off event or that the battery level of the terminal is less than the preset threshold, the method further comprises:
switching, by the terminal, the second card to an inactivated state, wherein the first card list does not comprise the second card.

3. The method according to claim 1 or 2, wherein the terminal further comprises a second card list, the second card list comprises information about a card that is set to support a transaction in a preset mode during power off of the terminal or when the battery level of the terminal is less than the preset threshold, and the second card list comprises the first card; and
before the switching, by the terminal, the first card to an activated state after the terminal detects a power-off event or that the battery level of the terminal is less than the preset threshold, the method further comprises:
switching, by the terminal, a working mode of the first card to the preset mode.

4. The method according to claim 3, wherein the terminal further comprises a third card; and
the third card is in an activated state when the terminal is in a power-on state or the battery level of the terminal is greater than or equal to the preset threshold; and the method further comprises:
switching, by the terminal, a working mode of the third card to the preset mode after the terminal detects the power-off event or that the battery level of the terminal is less than the preset threshold, wherein the second card list comprises the third card.

5. The method according to claim 3 or 4, wherein a card set in the second card list is a subset of a card set in the first card list.

6. The method according to any one of claims 1 to 5, wherein after the switching, by the terminal, the first card to an activated state, the method further comprises:
switching, by the terminal, the first card to an inactivated state after the terminal detects a power-on event or that the battery level of the terminal is greater than or equal to the preset threshold.

7. The method according to claim 6, wherein the method further comprises:
storing, by the terminal, a first state of the first card, wherein the first state is a status of the first card when the terminal is in a power-on state or the battery level of the terminal is greater than or equal to the preset threshold; and
the switching, by the terminal, the first card to an inactivated state after the terminal detects a power-on event or that the battery level of the terminal is greater than or equal to the preset threshold comprises:
further obtaining, by the terminal, a second state of the first card after the terminal detects the power-on event or that the battery level of the terminal is greater than or equal to the preset threshold, wherein the second state is a status of the first card when the terminal is in a power-off state or the battery level of the terminal is less than the preset threshold; and
switching, by the terminal, the first card to an inactivated state when the first state of the first card is an inactivated state and the second state of the first card is an activated state.

8. The method according to claim 2, wherein after the switching, by the terminal, the second card to an inactivated state, the method further comprises:
switching, by the terminal, the second card to an activated state after the terminal detects a power-on event or that the battery level of the terminal is greater than or equal to the preset threshold.

9. The method according to claim 3, wherein after the switching, by the terminal, a working mode of the first card to the preset mode, the method further comprises:
switching, by the terminal, the first card to a non-preset mode after the terminal detects a power-on event or that the battery level of the terminal is greater than or equal to the preset threshold.

10. The method according to claim 4, wherein after the switching, by the terminal, a working mode of the third card to the preset mode, the method further comprises:
switching, by the terminal, the third card to a non-preset mode after the terminal detects a power-on event or that the battery level of the terminal is greater than or equal to the preset threshold.

11. The method according to any one of claims 1 to 10, wherein before the switching, by the terminal, the first card to an activated state after the terminal detects a power-off event or that the battery level of the terminal is less than the preset threshold, the method further comprises:
receiving, by the terminal, a first operation of a user, and determining, by the terminal, the first card list based on the first operation.

12. The method according to claim 11, wherein the method further comprises:
receiving, by the terminal, a second operation of the user, and determining, by the terminal, the second card list based on the first card list and the second operation.

13. The method according to any one of claims 1 to 12, wherein the terminal comprises a near field communication NFC module; and after the switching, by the terminal, the first card to an activated state after the terminal detects a power-off event or that the battery level of the terminal is less than the preset threshold, the method further comprises:
after the terminal is powered off or the battery level of the terminal is less than the preset threshold, receiving, by the terminal by using the NFC module, an instruction for selecting the first card by a card reading device; and
in response to the instruction for selecting the first card, performing, by the first card in the terminal, a transaction service with the card reading device.

14. A terminal, comprising a processor, a memory, a near field communication NFC module, a secure element SE module, and a touchscreen, wherein the memory, the touchscreen, the NFC module, and the SE module are coupled to the processor, the SE module comprises a first card, the memory is configured to store computer program code, the computer program code comprises computer instructions, and when the processor reads the computer instructions from the memory, the terminal is enabled to perform the card switching method according to any one of claims 1 to 13.

15. A computer-readable storage medium, comprising computer instructions, wherein when the computer instructions are run on a terminal, the terminal is enabled to perform the card switching method according to any one of claims 1 to 13.

16. A chip system, comprising one or more processors, wherein when the one or more processors execute instructions, the one or more processors perform the card switching method according to any one of claims 1 to 13.
